# EUROPEAN PATENT SPECIFICATION

(11) **EP 4 437 241 B1**
(45) Date of publication and mention of the grant of the patent: **15.04.2026**
(21) Application number: 22839293.2
(22) Date of filing: 16.12.2022
(51) Int. Cl.: F16C 11/06, F16J 3/04, F16D 3/84

(54) **BELLOWS FOR PROTECTION OF TRANSMISSION JOINT**
FALTENBALG ZUM SCHUTZ EINER ÜBERTRAGUNGSVERBINDUNG
SOUFFLET POUR LA PROTECTION D'UN JOINT DE TRANSMISSION

(30) Priority: 28.12.2021 DE 102021006381
(43) Date of publication of application: 02.10.2024
(73) Proprietor: Neapco Intellectual Property Holdings, LLC, Farmington Hills, MI 48331 (US)
(72) Inventor: DUDA, Filip, 46-320 Praszka (PL); KRUPA, Kamil, 46-320 Praszka (Strojec) (PL); PRAKASH, Srinath, 46-320 Praszka (PL)
(74) Representative: Lohmanns, Bernard
(86) International application number: PCT/EP2022/086298
(87) International publication number: WO 2023/126211

(56) References cited:
- EP-A1- 0 430 742
- EP-A1- 3 489 536
- EP-A1- 3 828 448
- EP-B1- 1 201 950
- WO-A1-2020/115414
- US-A1- 2011 092 352
- US-A1- 2019 368 551

## Description

The disclosure relates to a bellows for the protection of parts of a transmission joint, wherein the bellows is in the form of a hollow tubular body that is open at each of its ends. The bellows has a fastening region at each of its open ends, wherein the two fastening regions have cross-sections with different outer diameters and run essentially in parallel to a longitudinal axis of the bellows. These end side fastening regions are interconnected by a deformable wall that runs transverse to the longitudinal axis of the bellows, wherein the deformable wall forms at least one fold between the two fastening regions.

Rolling bellows or boots of the aforementioned type are known from the prior art. The bellows can be mounted on a transmission joint by means of two fastening regions, whereby a first fastening region is fastened to an outer joint member and a second fastening region is fastened to the drive shaft that is received in an inner joint member. For instance, US 2011/0092352 A1 describes a rolling boot having a first fastening region intended for fastening to a joint housing and a second fastening region intended for fastening to a shaft. There is a fold region between these two fastening regions which can deform when the outer joint member and the inner joint member of a transmission joint are at an angle to each other. However, the fold region has to be designed so that undesired deformation and in particular the formation of bulges is prevented. The formation of bulges is also called buckling.

A bellows according the preamble of claim 1 is disclosed in EP 3 828 448 A1. Conventional bellows are further known from EP 1 201 950 B1, EP 3 489 536 A1, EP 0 430 742 A1, WO 2020/115414 A1, US 2011/092352 A1, US 2019/368551 A1, EP 1 201 950 B1 and US 2019/368551 A1.

Often reinforcing ribs in the fold region are provided to prevent buckling of the boot when the outer joint member and the inner joint member of a transmission joint are at large angles to each other. It is also known to provide folds with specific forms, dimensions and parameters. However, there is still a need for simple and reliable solutions that can prevent buckling of a boot/bellows.

Therefore, the object of the invention is to provide a bellows with good flexibility and buckling avoidance.

According to the invention, this object is achieved by a bellows according to independent claim 1. Advantageous embodiments of this bellows can be derived from dependent claims 2 to 11.

The bellows according to the invention is used for the protection of parts of a transmission joint. Such bellows can also be called a boot. The transmission joint can be a constant velocity joint, for example. Constant velocity joints are common components in automotive vehicles for applications requiring a transmission of rotating motion such as constant velocity motion. Constant velocity joints are typically used in front wheel drive vehicles and rear wheel drive vehicles to transmit torque from a transmission of a vehicle to the drive wheels at a constant velocity or speed. Although, in certain applications, constant velocity joints can also be used in all wheel drive and four-wheel drive vehicles.

Common types of constant velocity joints include an outer joint member and an inner joint member. The outer joint member typically includes a hollow chamber which is open at one end and closed at an opposing end, with recesses and/or tracks formed in an inner wall thereof to receive transmission balls. The inner joint member has outer tracks to receive the transmission balls and the inner joint member is configured to receive a drive shaft of the vehicle. The outer joint member co-axially receives the inner joint member.

The bellows according to the invention can be mounted on a transmission joint by means of two fastening regions, whereby a first fastening region is fastened to the outer joint member and a second fastening region is fastened to the drive shaft that is received in the inner joint member of a transmission joint. Thereby, the bellows forms an inner space that is closed to the surroundings so that no dirt can enter the transmission joint. In addition, the inner space can be filled with a lubricant and no lubricant can leave the inner space.

According to the invention, the bellows is provided according to claim 1 in the form of a hollow tubular body that is open at each of its ends and has a fastening region at each of its open ends. The two fastening regions have cross-sections with different outer diameters and run essentially in parallel to a longitudinal axis of the bellows. The first fastening region with the larger outer diameter can then be fastened to the outer joint member, whereas the second fastening region with a smaller outer diameter can be fastened to the drive shaft that is received in the inner joint member. Components of the transmission joint are then protected within the hollow tubular body.

The end side fastening regions are interconnected by a deformable wall that runs transverse to the longitudinal axis of the bellows, wherein the deformable wall forms at least one fold between the two fastening regions. The material of the deformable wall is flexible and can be a thermoplastic elastomer or rubber, for example. The rest of the bellows can be made of the same material, or at least the fastening regions can be made of a material that is less flexible. In addition, the bellows which includes at least the two fastening regions and the deformable wall can be one piece. In another embodiment, several parts are joined to form the bellows. In any case, when the outer joint member and the inner joint member of a joint move in relation to each other, the deformable wall can easily deform because of its flexible material. This is supported by the at least one fold, whereby the side flanks of the fold can move and bend freely. Furthermore, flexibility and stiffness can also be guaranteed by the geometry of the bellows.

According to the invention, a first fastening region with the larger outer diameter D is extended in the direction of a second fastening region with the smaller outer diameter d by means of a circumferential extension section with a circular free edge. This means that the first fastening region is extended by an extension section, whereby this extension section is not used for fastening the bellows to an outer joint member. Therefore, it can move freely and this circumferential extension section ends with a circular free edge. The deformable wall is connected to this extension section at a first connection line which is located before the free edge of the extension section. This means that the deformable wall is not connected to the free edge at the end of the extension section, but it connects to the extension section at a certain distance to the free edge. Consequently, the first connection line is located at a certain distance to the free edge so that a collar or stiffener region is formed beyond this first connection line. The collar is formed on the outside of the bellows. The distance a between the first connection line and the free edge of the collar is at least 2mm, preferably at least 2,5mm, more preferably at least 3mm**.**

According to the invention, the outer surface of the extension section is straight at least between the first connection line and the free edge. This straight and flat collar provides proper boot flexibility and buckling avoidance. In one embodiment of the invention, a is the distance between the first connection line and the free edge of the extension section and a = (0,02 to 0,2) x D.

In one embodiment, the outer surface of the first fastening region and the outer surface of the extension section merge steplessly into each other. Thus, the outer diameter can increase or decrease successively, but preferably, there are no steps or abrupt changes of orientation of the outer surface of the first fastening region and the extension section. In particular, it is advantageous that the outer surface of the extension section is straight between the first fastening region and the free edge of the extension section.

In another embodiment of the invention, there can be one or more steps between the outer surface of the first fastening region and the outer surface of the extension section. A step means that the outer diameter of the bellows increases or decreases in an area. Preferably, the diameter decreases to form a step towards the inside. Alternatively, the extension section comprises one or more steps as described before. When the bellows is mounted to a transmission joint, the first fastening region is fastened to the outer joint member of the joint, whereby the outer joint member may protrude beyond the first fastening region in the axial direction towards the second fastening region. This means that the extension section lies in the area of the outer joint member. For example for these embodiments, a step can then be located in the extension section behind the end of the outer joint member so that the diameter decreases after the bellows passes the end of the outer joint member.

The deformable wall forms a flexible part, whereas the fastening regions form a relatively stiff part. Thereby, the deformable wall includes at least one fold which can be incorporated into the deformable wall in various ways. According to the invention, the deformable wall forms a straight leg which is connected to the extension section at the first connection line. Therefore, the first part of the deformable wall starting at the extension section is straight. According to the invention, the deformable wall and the extension section intersect at an angle α of 45° to 90° on the inside of the bellows. In addition, it is preferred that the thickness b of the straight leg of the deformable wall is smaller than the thickness c of the circular free edge of the extension section.

According to the invention, the second fastening region with the smaller outer diameter d is extended in the direction of the first fastening region with the larger outer diameter D by means of a circumferential neck section and the deformable wall is connected to this neck section at a second connection line. In addition, the deformable wall forms a fold between the straight leg and the neck section, whereby the fold is a convex bulge on the outside of the bellows. The radius R2 of the fold on the inside of the bellows is smaller than 12 mm, preferably smaller than 10 mm.

In addition, it is preferred that an angle β spans between the inner surface of the neck section and the longitudinal axis X of the bellows and this angle β is smaller than 15°. Further, the connection line at the connection of the deformable wall to the extension section axially lies closer to the second fastening region than the second connection line at the connection of the deformable wall to the neck section.

In one embodiment, the deformable wall forms a curved leg which is connected to the neck section at the second connection line, whereby the curved leg is concave on the outside of the bellows. This curved leg has a radius R1 on the outside of the bellows, which also is smaller than 12 mm, preferably smaller than 10 mm. The same applies for the transition from the straight leg of the deformable wall to the fold. This transition is curved and the radius R3 of this curved transition on the outside of the bellows is smaller than 12 mm, preferably smaller than 10 mm.

In particular with a combination of all these parameters, proper boot flexibility and buckling avoidance can be achieved. This has been analysed by the applicant compared to bellows without a stiffener region according to the invention.

The invention will be explained in greater detail below based on the attached figures. These must be viewed only as examples, and are not intended to limit the invention to the depicted embodiments. Shown on:
- Fig. 1:: a cross-sectional view of one embodiment of the bellows according to the invention;
- Fig. 2:: the cross-sectional view of Fig. 1 indicating different functional regions of the bellows;
- Fig. 3:: a three-dimensional illustration of the cross-sectional view of the bellows of Fig. 1;
- Fig. 4:: a three-dimensional illustration of the bellows of Fig. 1;
- Fig. 5:: a cross-sectional view of a bellows of Fig. 1 mounted on a transmission joint;
- Fig. 6:: a three-dimensional illustration of the assembly of Fig. 5;
- Fig. 7:: a three-dimensional illustration of the buckling behaviour of a prior art bellows; and
- Fig. 8:: a three-dimensional illustration of the behaviour of a bellows according to the invention without buckling.

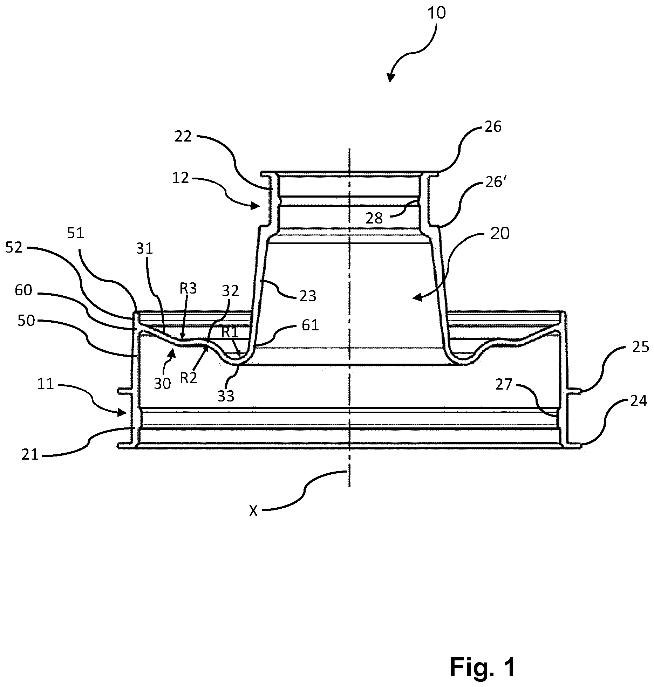

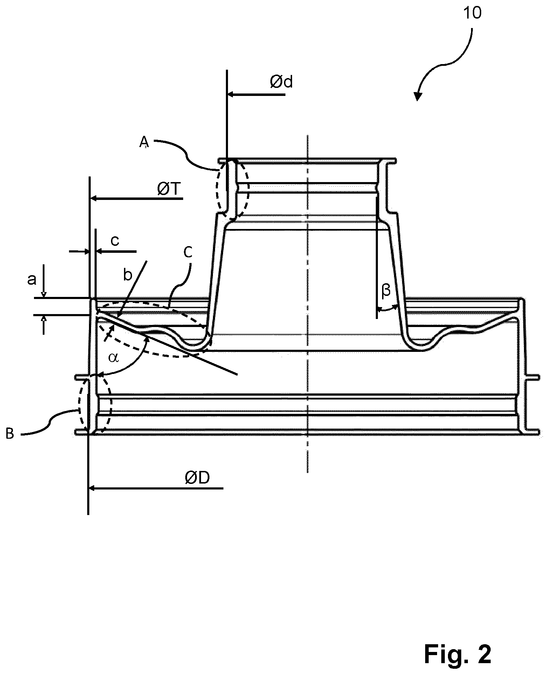

Figs. 1 and 2 each show a cross-sectional view of one embodiment of a bellows or boot 10 according to the invention. Thereby, Fig. 1 includes reference numerals to indicate the different parts of the bellows 10. **In** addition, Fig. 2 indicates the different functional regions of the bellows without reference numerals in order to increase the clarity of illustration. **If** parts or regions of the bellows 10 are described with respect to one of these figures, one has to consider that the main parts of the bellows 10 form an axisymmetric body in relation to the longitudinal axis X. Therefore, they are round and circumferential.

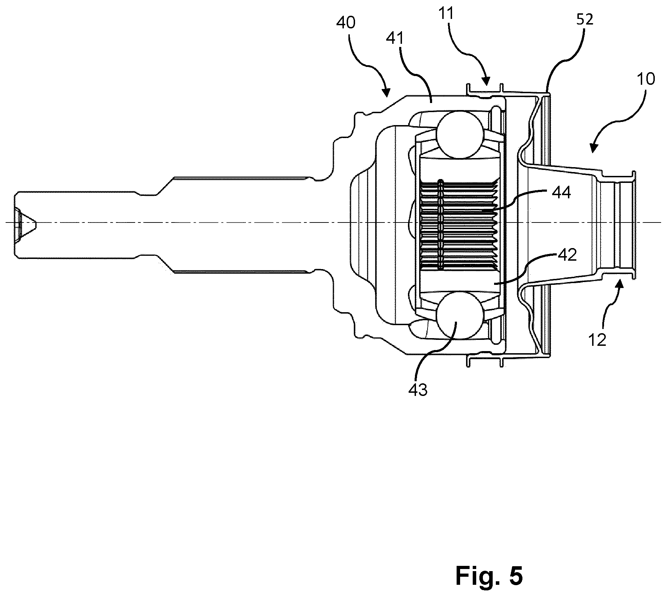

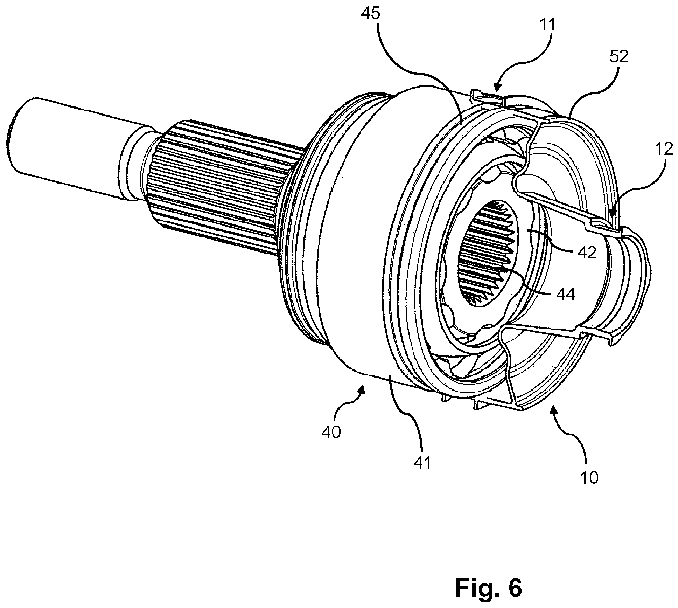

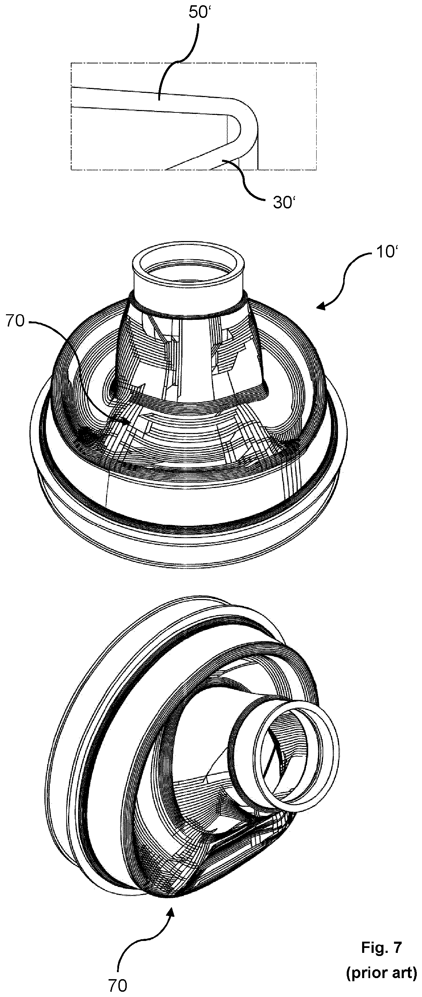

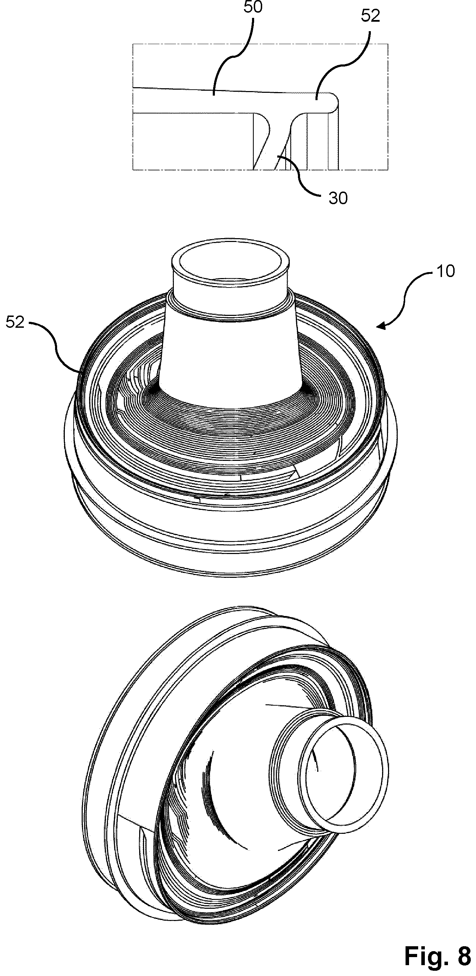

The bellows 10 can be used for the protection of parts of a transmission joint, whereby an exemplary assembly of a bellows 10 to a transmission joint 40 is shown in Figures 5 and 6. Fig. 7 shows the behavior of a bellows 10' without a stiffener according to the invention, whereby the bellows 10' undergoes a buckling when the outer joint member and the inner joint member of a transmission joint are at a large angle to each other. In contrast, Fig. 8 shows the improved behavior of a bellows 10 with a stiffener 52 according to the invention.

Thereby, the bellows 10 has the form of a hollow tubular body that is open at each of its ends and has a fastening region at each of its open ends. The two fastening regions 21 and 22 have cross-sections with different outer diameters and run essentially in parallel to the longitudinal axis X of the bellows 10. An inner space 20 is created within the tubular body and components of a transmission joint can be incorporated into this inner space 20. This inner space 20 also defines the inside of the bellows 10. The space outside the tubular body is the outside of the bellows.

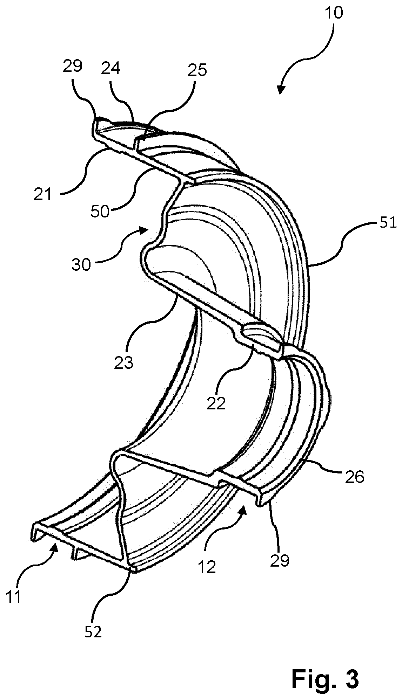

A first fastening region 21 has a larger outer diameter D and a second fastening region 22 has a smaller outer diameter d. These fastening regions 21 and 22 basically have a hollow cylindrical shape with walls that run essentially in parallel to the longitudinal axis X. On the inside of each fastening region 21, 22, there is a ring 27 and 28 which interacts with a corresponding channel on the outer joint member of a transmission joint or a drive shaft. Fig. 6 shows such channel 45 on the outer surface of the outer joint member, for example. Each fastening region 21 and 22 is also part of a corresponding seat region A and B (see Fig. 2). Each seat region A and B is axially limited by lateral walls to hold fixing stripes within each seat region. For example, the first fastening region 21 of the seat region B has two outer lateral circumferential walls 24 and 25, which can be derived from Fig. 3. A seat 11 is formed between these two walls 24, 25 which can hold a fixing stripe. The second fastening region 22 also has a circumferential outer wall 26 and the other side the seat region A is limited by a step 26'. This step 26' is formed by a neck section 23 that extends the second fastening region 22 in the direction of the first fastening region 21. A seat 12 is formed between this step 26' and the wall 26.

The neck section 23 does not run in parallel to the longitudinal axis X. Instead, an angle β spans between the longitudinal axis X of the bellows 10 and the inner surface of the neck section 23. In addition, the thickness of the neck section 23 decreases in the direction from the second fastening region 22 towards the first fastening region 21. On the other side, an extension section 50 extends the first fastening region 21 in the direction of the second fastening region 22. This extension section 50 has a circumferential free edge 51. T is the outer diameter of the extension section 50 at its free edge 51 and D > T.

A deformable wall 30 connects the extension section 50 and the neck section 23. Thereby, the deformable wall 30 is connected to the extension section 50 at a first connection line 60 that is located before the free edge 51. Thereby, a collar or stiffener 52 is formed with the length a. This means, there is a distance a between the deformable wall 13 and the free edge 51. The thickness of this collar or stiffener 52 is indicated with the letter c in Fig. 2 and it can be seen that the connection between the extension section 50 and the deformable wall 30 forms an italic "T".

The deformable wall 30 forms a flexible region C between the two fastening regions 21 and 22, in particular between the extension section 50 and the neck section 23. Thereby, the first connection line 60 between the deformable wall 30 and the extension section 50 axially lies closer to the second fastening region 22 than a second connection line 61 between the deformable wall 30 and the neck section 23. This is the reason why the deformable wall 30 forms a sink on the outside of the bellows 10 with the neck section 23 in the middle of the sink. Thereby, the deformable wall 30 has a straight leg 31 that is connected to the extension section 50. The angle α spans between the extension section 50 and this straight leg 31, whereby the angle α is between 45° and 90°.

The deformable wall 30 also has a curved leg 33 that is connected to the neck section 23 at the second connection line 61. A fold 32 is located between the straight leg 31 and the curved leg 33. This fold is a bulge which is convex when seen from the outside of the bellows 10. The radius R1 of the curved leg 33, the radius R2 of the fold 32 and the radius R3 of the transition from the straight leg 31 to the fold 32 is rather small. Preferably, these radii are smaller than 12 mm or even smaller than 10 mm. Besides, the thickness b of the straight leg 31 is smaller than the thickness c of the free edge 51.

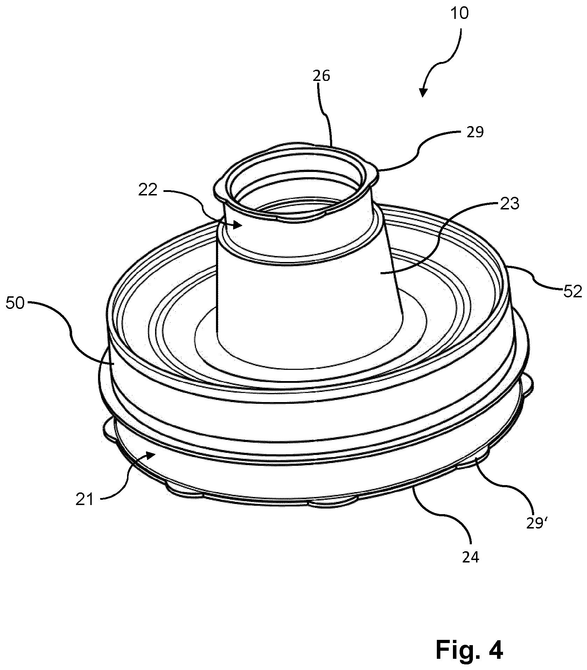

The three-dimensional illustration of Fig. 4 shows the outer shape of the bellows 10. It shows the sink-like and concave outer form of the region between the extension section 50 and the neck section 23 in the middle. From this perspective it can also be seen that the outer walls 26 and 24 can comprise several bulges, wherein one of four bulges at the outer wall 26 is identified with the one reference number 29. One of eight bulges at the outer wall 24 is identified with the one reference number 29'. These bulges can be used to hold a clamp before the bellows 10 is clamped to a joint member/shaft

Fig. 5 shows a cross-sectional view of a bellows 10 of Fig. 1 mounted on a transmission joint 40. The transmission joint 40 is a constant velocity joint with an outer joint member 41 and an inner joint member 42. The outer joint member 41 has inner tracks and the inner joint member 42 has outer tracks, whereby transmission balls 43 are rotationally held in these tracks. The inner joint member 41 has an internal gearing 44 and a drive shaft with an external gearing can interlock with this internal gearing 44. The drive shaft is not shown in the figures. Fig. 6 shows the transmission joint 40 with the bellows 10 which is cut. The ring 27 of the first fastening region 21 is seated in the circumferential channel 45 on the outer surface of the outer joint member 41. When a drive shaft is connected to the inner joint member 42, the ring 28 will be seated in a circumferential channel on the drive shaft. Fixing stripes (not shown) can hold the seat regions A, B and 11, 12, respectively, on the outer joint member 41 and the drive shaft.

Compared to known bellows, the bellows 10 according to the invention with the stiffening collar 52 has the advantage of better boot flexibility and buckling avoidance. Bellows without such stiffening collar 52 tend to buckle at larger angles between the two joint members of a transmission joint. Fig. 7 illustrates this problem with respect to a bellows 10' with an extension section 50' and straight leg 30', but without stiffening collar. The bellows 10' will likely show buckling 70. In contrast, Fig. 8 shows the corresponding behaviour of a bellows 10 with a stiffening collar 52. The bellows 10 shows no buckling at larger angles between the two joint members of a transmission joint.

The combination of parameters mentioned can further improve the boot flexibility and can help to avoid buckling.

### List of reference numerals:

- 10,10': Bellows, boot
- 11,12: Seat
- 20: Inner space
- 21: Fastening region, large
- 22: Fastening region, small
- 23: Neck section
- 24,25,26: Wall
- 26': Step
- 27,28: Ring
- 29,29': Bulge
- 30,30': Deformable wall
- 31: Straight leg
- 32: Fold
- 33: Curved leg
- 40: Transmission joint
- 41: Outer joint
- 42: Inner joint
- 43: Transmission ball
- 44: Internal gearing
- 45: Channel
- 50,50': Extension section
- 51: Free edge
- 52: Collar, stiffener
- 60,61: Connection line

- A,B: Seat region
- C: Flexible region
- D,d,T: Diameter
- X: Longitudinal axis

- a: Length of stiffener region
- b: Thickness of straight leg
- c: Thickness of collar/stiffener region

- α, β: Angle
- R1,R2,R3: Radius

## Claims

1. Bellows (10) for the protection of parts of a transmission joint (40), wherein the bellows (10) is in the form of a hollow tubular body that is open at each of its ends and has a fastening region (21;22) at each of its open ends having cross-sections with different outer diameters: a first fastening region (21) with a larger outer diameter D and a second fastening region (22) with a smaller outer diameter d, wherein the two fastening regions (21;22) run essentially in parallel to a longitudinal axis (X) of the bellows (10), and these end side fastening regions (21;22) are interconnected by a deformable wall (30) that runs transverse to the longitudinal axis (X) of the bellows (10), wherein the deformable wall (30) forms at least one fold (32) between the two fastening regions (21;22), wherein the second fastening region (22) is extended in the direction of the first fastening region (21) with the larger outer diameter D by means of a circumferential neck section (23) and the deformable wall (30) is connected to this neck section (23) at a second connection line (61);
wherein the first fastening region (21) is extended in the direction of the second fastening region (22) by means of a circumferential extension section (50) with a circular free edge (51) and the deformable wall (30) is connected to this extension section (50) at a first connection line (60) which is located before the free edge (51) of the extension section (50); and
the outer surface of the extension section (50) is straight at least between the first connection line (60) and the free edge (51) and in that the first connection line (60) between the deformable wall (30) and the extension section (50) axially lies closer to the second fastening region (22) than the second connection line (61), so that the deformable wall (30) forms a sink on the outside of the bellows (10) with the neck section (23) in the middle of the sink, wherein the deformable wall (30) forms a straight leg (31) which is connected to the extension section (50) at the first connection line (60)
**characterized in that**
the deformable wall (30) and the extension section (50) intersect at an angle a of 45° to 90° on the inside of the bellows (10) and **in that** there is a distance between the deformable wall (30) and the free edge (51), so that a straight and flat collar (52) is formed on the outside of the bellows (10).

2. Bellows according to claim 1, wherein the outer surface of the first fastening region (21) and the outer surface of the extension section (50) merge steplessly into each other.

3. Bellows according to one of the preceding claims 1 or 2, wherein the thickness b of the straight leg (31) of the deformable wall (30) is smaller than the thickness c of the circular free edge (51) of the extension section (50).

4. Bellows according to one of the preceding claims 1 to 3, wherein a is the distance between the first connection line (60) and the free edge (51) of the extension section (50) and a = (0,02 to 0,2) x D.

5. Bellows according to one of the preceding claims 1 to 4, wherein T is the outer diameter of the extension section (50) at its free edge (51) and D > T.

6. Bellows according to one of the preceding claims 1 to 5, wherein the deformable wall (60) forms a fold (32) between the straight leg (31) and the neck section (23), whereby the fold (32) is a convex bulge on the outside of the bellows (10).

7. Bellows according to claim 6, wherein the radius R2 of the fold (32) on the inside of the bellows (10) is smaller than 12 mm, preferably smaller than 10 mm.

8. Bellows according to one of claims 1 to 7, wherein between the inner surface of the neck section (23) and the longitudinal axis X of the bellows (10) spans an angle β which is smaller than 15°.

9. Bellows according to one of claims 1 to 8, wherein the deformable wall (30) forms a curved leg (31) which is connected to the neck section (23) at the second connection line (61), whereby the curved leg (31) is concave on the outside of the bellows (10).

10. Bellows according to claim 9, wherein the curved leg (31) has a radius R1 on the outside of the bellows (10), which is smaller than 12 mm, preferably smaller than 10 mm.

11. Bellows according to one of claims 1 to 10, wherein the transition from the straight leg (31) of the deformable wall (30) to the fold (32) is curved and the radius R3 of this curved transition on the outside of the bellows (10) is smaller than 12 mm, preferably smaller than 10 mm.

## Patentansprüche

1. Faltenbalg (10) zum Schutz von Teilen eines Antriebsgelenks (40), wobei der Faltenbalg (10) in Form eines hohlen rohrförmigen Körpers ausgebildet ist, der an jedem seiner Enden offen ist und an jedem seiner offenen Enden einen Befestigungsbereich (21;22) mit Querschnitten mit unterschiedlichen Außendurchmessern aufweist: einen ersten Befestigungsbereich (21) mit einem größeren Außendurchmesser D und einen zweiten Befestigungsbereich (22) mit einem kleineren Außendurchmesser d, wobei die beiden Befestigungsbereiche (21;22) im Wesentlichen parallel zu einer Längsachse (X) des Faltenbalgs (10) verlaufen und diese endständigen Befestigungsbereiche (21;22) durch eine verformbare Wand (30) miteinander verbunden sind, die quer zur Längsachse (X) des Faltenbalgs (10) verläuft, wobei die verformbare Wand (30) wenigstens eine Falte (32) zwischen den beiden Befestigungsbereichen (21;22) bildet, wobei der zweite Befestigungsbereich (22) in Richtung des ersten Befestigungsbereichs (21) mit dem größeren Außendurchmesser D mittels eines umlaufenden Halsabschnitts (23) verlängert ist und die verformbare Wand (30) mit diesem Halsabschnitt (23) an einer zweiten Verbindungslinie (61) verbunden ist;
wobei der erste Befestigungsbereich (21) in Richtung des zweiten Befestigungsbereichs (22) mittels eines umlaufenden Verlängerungsabschnitts (50) mit einer kreisförmigen freien Kante (51) verlängert ist und die verformbare Wand (30) mit diesem Verlängerungsabschnitt (50) an einer ersten Verbindungslinie (60) verbunden ist, die vor der freien Kante (51) des Verlängerungsabschnitts (50) liegt; und
die Außenoberfläche des Verlängerungsabschnitts (50) wenigstens zwischen der ersten Verbindungslinie (60) und der freien Kante (51) gerade ist und die erste Verbindungslinie (60) zwischen der verformbaren Wand (30) und dem Verlängerungsabschnitt (50) axial näher am zweiten Befestigungsbereich (22) liegt als die zweite Verbindungslinie (61), so dass die verformbare Wand (30) zusammen mit dem Halsabschnitt (23) in der Mitte der Senke an der Außenseite des Faltenbalgs (10) eine Senke bildet,
wobei die verformbare Wand (30) einen geraden Schenkel (31) bildet, der an der ersten Verbindungslinie (60) mit dem Verlängerungsabschnitt (50) verbunden ist, **dadurch gekennzeichnet, dass**
die verformbare Wand (30) und der Verlängerungsabschnitt (50) an der Innenseite des Faltenbalgs (10) unter einem Winkel a von 45° bis 90° aufeinandertreffen und dass zwischen der verformbaren Wand (30) und der freien Kante (51) ein Abstand vorhanden ist, so dass an der Außenseite des Faltenbalgs (10) ein gerader und flacher Kragen (52) gebildet ist.

2. Faltenbalg nach Anspruch 1, wobei die Außenoberfläche des ersten Befestigungsbereichs (21) und die Außenoberfläche des Verlängerungsabschnitts (50) stufenlos ineinander übergehen.

3. Faltenbalg nach einem der vorhergehenden Ansprüche 1 oder 2, wobei die Dicke b des geraden Schenkels (31) der verformbaren Wand (30) kleiner ist als die Dicke c der kreisförmigen freien Kante (51) des Verlängerungsabschnitts (50).

4. Faltenbalg nach einem der vorhergehenden Ansprüche 1 bis 3, wobei a der Abstand zwischen der ersten Verbindungslinie (60) und der freien Kante (51) des Verlängerungsabschnitts (50) ist und a = (0,02 bis 0,2) × D.

5. Faltenbalg nach einem der vorhergehenden Ansprüche 1 bis 4, wobei T der Außendurchmesser des Verlängerungsabschnitts (50) an seiner freien Kante (51) ist und D > T.

6. Faltenbalg nach einem der vorhergehenden Ansprüche 1 bis 5, wobei die verformbare Wand (60) eine Falte (32) zwischen dem geraden Schenkel (31) und dem Halsabschnitt (23) bildet, wobei die Falte (32) eine konvexe Wölbung an der Außenseite des Faltenbalgs (10) ist.

7. Faltenbalg nach Anspruch 6, wobei der Radius R2 der Falte (32) an der Innenseite des Faltenbalgs (10) kleiner als 12 mm, vorzugsweise kleiner als 10 mm ist.

8. Faltenbalg nach einem der Ansprüche 1 bis 7, wobei zwischen der Innenoberfläche des Halsabschnitts (23) und der Längsachse X des Faltenbalgs (10) ein Winkel β aufgespannt ist, der kleiner als 15° ist.

9. Faltenbalg nach einem der Ansprüche 1 bis 8, wobei die verformbare Wand (30) einen gekrümmten Schenkel (31) bildet, der an der zweiten Verbindungslinie (61) mit dem Halsabschnitt (23) verbunden ist, wobei der gekrümmte Schenkel (31) an der Außenseite des Faltenbalgs (10) konkav ist.

10. Faltenbalg nach Anspruch 9, wobei der gekrümmte Schenkel (31) an der Außenseite des Faltenbalgs (10) einen Radius R1 aufweist, der kleiner als 12 mm, vorzugsweise kleiner als 10 mm ist.

11. Faltenbalg nach einem der Ansprüche 1 bis 10, wobei der Übergang vom geraden Schenkel (31) der verformbaren Wand (30) zur Falte (32) gekrümmt ist und der Radius R3 dieses gekrümmten Übergangs an der Außenseite des Faltenbalgs (10) kleiner als 12 mm, vorzugsweise kleiner als 10 mm ist.

## Revendications

1. Soufflet (10) pour la protection de parties d'une articulation de transmission (40), le
soufflet (10) étant réalisé sous la forme d'un corps tubulaire creux ouvert à chacune de ses extrémités et présentant, à chacune de ses extrémités ouvertes, une zone de fixation (21;22) ayant des sections transversales avec des diamètres extérieurs différents : une première zone de fixation (21) avec un diamètre extérieur plus grand D et une deuxième zone de fixation (22) avec un diamètre extérieur plus petit d, les deux zones de fixation (21;22) s'étendant essentiellement parallèlement à un axe longitudinal (X) du soufflet (10), et ces zones de fixation d'extrémité (21;22) étant reliées entre elles par une paroi déformable (30) s'étendant transversalement à l'axe longitudinal (X) du soufflet (10), la paroi déformable (30) formant au moins un pli (32) entre les deux zones de fixation (21;22), la deuxième zone de fixation (22) étant prolongée en direction de la première zone de fixation (21) ayant le diamètre extérieur plus grand D au moyen d'une section de collet circonférentielle (23), et la paroi déformable (30) étant reliée à cette section de collet (23) au niveau d'une deuxième ligne de liaison (61) ;
la première zone de fixation (21) étant prolongée en direction de la deuxième zone de fixation (22) au moyen d'une section d'extension circonférentielle (50) présentant un bord libre circulaire (51), et la paroi déformable (30) étant reliée à cette section d'extension (50) au niveau d'une première ligne de liaison (60), située avant le bord libre (51) de la section d'extension (50); et
la surface extérieure de la section d'extension (50) étant droite au moins entre la première ligne de liaison (60) et le bord libre (51), et la première ligne de liaison (60) entre la paroi déformable (30) et la section d'extension (50) étant située axialement plus près de la deuxième zone de fixation (22) que la deuxième ligne de liaison (61), de sorte que la paroi déformable (30) forme, avec la section de collet (23) au milieu de l'évidement, un évidement sur la face extérieure du soufflet (10),
la paroi déformable (30) formant une branche droite (31) qui est reliée à la section d'extension (50) au niveau de la première ligne de liaison (60), **caractérisé en ce que**
la paroi déformable (30) et la section d'extension (50) se rencontrent sous un angle a de 45° à 90° sur la face intérieure du soufflet (10), et qu'il existe une distance entre la paroi déformable (30) et le bord libre (51), de sorte qu'un collerette droite et plate (52) est formée sur la face extérieure du soufflet (10).

2. Soufflet selon la revendication 1, dans lequel la surface extérieure de la première zone de fixation (21) et la surface extérieure de la section d'extension (50) se raccordent l'une à l'autre sans marche.

3. Soufflet selon l'une des revendications précédentes 1 ou 2, dans lequel l'épaisseur b de la branche droite (31) de la paroi déformable (30) est inférieure à l'épaisseur c du bord libre circulaire (51) de la section d'extension (50).

4. Soufflet selon l'une des revendications précédentes 1 à 3, dans lequel a est la distance entre la première ligne de liaison (60) et le bord libre (51) de la section d'extension (50) et a = (0,02 à 0,2) × D.

5. Soufflet selon l'une des revendications précédentes 1 à 4, dans lequel T est le diamètre extérieur de la section d'extension (50) au niveau de son bord libre (51) et D > T.

6. Soufflet selon l'une des revendications précédentes 1 à 5, dans lequel la paroi déformable (60) forme un pli (32) entre la branche droite (31) et la section de collet (23), le pli (32) constituant un bombement convexe sur la face extérieure du soufflet (10).

7. Soufflet selon la revendication 6, dans lequel le rayon R2 du pli (32) sur la face intérieure du soufflet (10) est inférieur à 12 mm, de préférence inférieur à 10 mm.

8. Soufflet selon l'une des revendications 1 à 7, dans lequel entre la surface intérieure de la section de collet (23) et l'axe longitudinal X du soufflet (10) est défini un angle β qui est inférieur à 15°.

9. Soufflet selon l'une des revendications 1 à 8, dans lequel la paroi déformable (30) forme une branche courbe (31) qui est reliée à la section de collet (23) au niveau de la deuxième ligne de liaison (61), la branche courbe (31) étant concave sur la face extérieure du soufflet (10).

10. Soufflet selon la revendication 9, dans lequel la branche courbe (31) présente sur la face extérieure du soufflet (10) un rayon R1 inférieur à 12 mm, de préférence inférieur à 10 mm.

11. Soufflet selon l'une des revendications 1 à 10, dans lequel la transition entre la branche droite (31) de la paroi déformable (30) et le pli (32) est courbe et le rayon R3 de cette transition courbe sur la face extérieure du soufflet (10) est inférieur à 12 mm, de préférence inférieur à 10 mm.
